# EUROPÄISCHE PATENTSCHRIFT

(11) **EP 0 521 822 B1**
(45) Veröffentlichungstag und Bekanntmachung des Hinweises auf die Patenterteilung: **31.01.1996**
(21) Anmeldenummer: 92810475.1
(22) Anmeldetag: 23.06.1992
(51) Int. Cl.: F16L 23/04, F16L 37/12, E04C 5/10

(54) **Vorrichtung zum Verbinden von zwei Hüllrohren**
Device for the connection of two jacket tubes
Dispositif pour le raccordement de deux gaines

(30) Priorität: 04.07.1991 CH 1985/91
(43) Veröffentlichungstag der Anmeldung: 07.01.1993
(73) Patentinhaber: VSL International AG, CH-3008 Bern (CH)
(72) Erfinder:
(74) Vertreter: Fischer, Franz Joseph

(56) Entgegenhaltungen:
- AT-A- 363 743
- CH-A- 677 395
- DE-A- 2 335 119
- DE-A- 2 910 684

## Beschreibung

Die Erfindung betrifft eine Vorrichtung zum Verbinden von zwei Hüllrohren, gemäss dem Oberbegriff des Patentanspruches 1.

Verbindungen dieser Art für Hüllrohre sind auf dem Gebiet der Spannkabeltechnik beim Erstellen von Tragwerken aus Beton bekannt. So zeigt beispielsweise die CH-PS 677 395 eine Verbindungsmuffe aus Kunststoff, um zwei koaxial aneinanderstossende Hüllrohre bzw. ein Hüllrohr mit einem dazu koaxial angeordneten Uebergangsstück zum Verankerungsteil zu verbinden. Hierzu dient eine aus zwei Teilschalen bestehende Muffe, die die beiden zu verbindenden Rohrenden umfasst und koaxial zusammenhält. Diese Muffe ist an ihren beidseitigen Enden mit je zwei umlaufenden Rippen ausgestaltet. In die durch die Rippenpaare gebildete Nut kommt je eine Ausbuchtung eines Hüllrohres zu liegen. Dadurch werden die Hüllrohre gehalten. Da die Rippenpaare, in welche die Ausbuchtungen der Hüllrohre zu liegen kommen, gleichzeitig mit Dichtlippen zum Abdichten gegen Eindringen von Flüssigkeit, insbesondere Zementmilch, zum Korrosionsschutz ausgerüstet sind, demzufolge aus eher weichem, elastischem Material bestehen, werden die Hüllrohre in diesem Bereich nicht in genügendem Masse abgestützt. Vielmehr lassen sich die Hüllrohre in diesem Bereich, insbesondere bei Knickbeanspruchung, gegenüber der Muffe bewegen. Um diese Bewegung vermeiden zu können, ist die Muffe im mittleren Bereich, d.h. im Bereich der Stossstelle der zu verbindenden Rohre, mit umlaufenden Rippen versehen, die diese Abstützung übernehmen sollen. Da die Abstützung durch diese zusätzlichen Rippen im Bereich der Stossstelle der zu verbindenden Rohre erfolgt, ist deren Wirkung nicht optimal, insbesondere dann, wenn die beiden zu verbindenden Rohre an der Stossstelle nicht gegeneinander zum Anliegen kommen.

Durch die mögliche Bewegung der beiden verbundenen Rohre inbezug auf die Muffe besteht die Gefahr, dass die Abdichtung durch die Dichtlippen gegen eindringendes Wasser nicht mit Sicherheit gewährleistet ist, insbesondere auch deshalb, weil die Dichtlippen an die Teilschalen angeformt sind und somit das Hüllrohr ebenfalls in zwei Teilen umschliessen, wodurch Stossstellen entstehen.

In der DE-PS 23 35 119 ist eine Möglichkeit aufgezeigt, wie zwei Rohre mittels einer Muffe und einem Dichtring dicht miteinander verbunden werden können. Es wird dabei davon ausgegangen, dass das Ende des einen Rohres derart ausgebildet ist, dass es in das Ende des anderen Rohres eingeschoben werden kann, wodurch sich eine überlappende Rohrverbindung ergibt. Die Muffe, die innen mit einer umlaufenden Nut versehen ist, umfasst an den Rohren ausgebildete, aneinanderstossende Ausbuchtungen. Da im vorliegenden Fall Hüllrohre an Ort und Stelle abgelängt werden und miteinander verbunden werden müssen, können die beiden Rohrenden nicht überlappend ineinandergeschoben werden, sondern sie können höchstens stirnseitig koaxial aneinander anstossen.

Die Aufgabe der Erfindung besteht darin, eine Vorrichtung zum Verbinden zweier Hüllrohre zu schaffen, welche leicht montierbar ist, bei welcher die Uebertragbarkeit von mechanischen Beanspruchungen von einem Hüllrohr auf das andere gut ist, und bei welcher aus Gründen des Korrosionsschutzes eine absolute Abdichtung gegen eindringende Flüssigkeit, insbesondere Zementmilch, erreichbar ist.

Erfindungsgemäss erfolgt die Lösung der Aufgabe gemäss den Merkmale des Anspruches 1.

In vorteilha ter Weise sind die Flansche des Kupplungsstückes so abgeschrägt, dass sie einerseits an der Schrägfläche der umlaufenden trapezförmigen Nut, die in den Muffen eingeformt ist, praktisch auf ihrer gesamten Fläche aufliegen, und dass andererseits die Abstützung der Ausbuchtung des Hüllrohres optimal wird. Beim Anbringen je eines Dichtringes zwischen der Schrägfläche jeder der Flansche und jeder Ausbuchtung der Hüllrohre wird dadurch eine optimale Dichtung gegen einen Flüssigkeitseintritt erreicht.

Das Kupplungsstück umschliesst die beiden Hüllrohrendbereiche vollständig bis zu den ersten Ausbuchtungen, wodurch die Uebertragung von mechanischen Beanspruchungen, insbesondere von der Knickbeanspruchung, von einem Hüllrohr auf das andere gewährleistet ist.

Eine weitere vorteilhafte Ausgestaltung der Erfindung besteht darin, dass jede der aus zwei Halbschalen bestehenden Muffen einseitig in axialer Richtung gelenkig verbunden ist, während die andere Seite mit einem Schnappmechanismus versehen ist, welcher beim Zusammendrücken der Halbschalen selbständig einklinkt und die Halbschalen fest miteinander verbindet. Dadurch wird ein einfaches Montieren der Muffen erreicht.

Zusätzliche vorteilhafte Ausgestaltungen der Erfindung ergeben sich aus den weiteren Unteransprüchen.

Ein Ausführungsbeispiel der Erfindung wird nachfolgend anhand der Zeichnungen nähere erläutert.

Es zeigen
- Fig. 1: eine Längsschnittdarstellung einer Verbindung Hüllrohr-Kupplungsstück-Hüllrohr gemäss Linie IV-IV nach Fig. 2,
- Fig. 2: eine Draufsicht auf die Verbindung gemäss Fig. 1, und
- Fig. 3: eine Schnittdarstellung der Muffe gemäss Linie III-III nach Fig. 1.

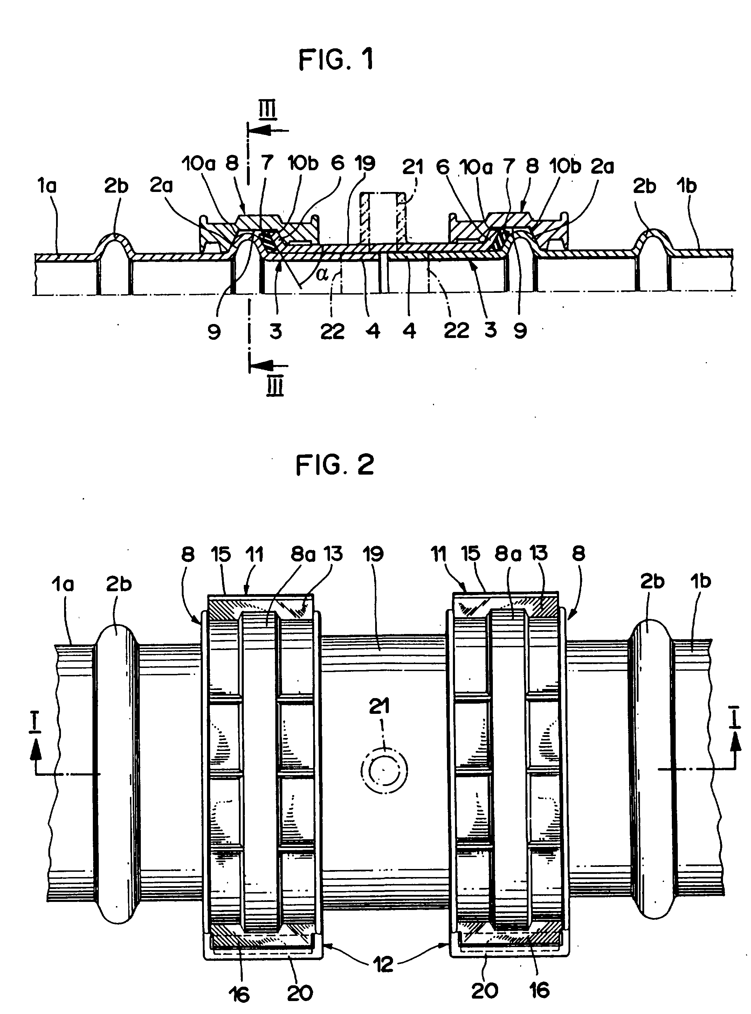

Gemäss Fig. 1 sind die Hüllrohre 1a, 1b mit voneinander beabstandeten Ausbuchtungen 2a, 2b versehen. Die Hüllrohrenden 3 sind so gestaltet, dass an je einer Ausbuchtung 2a ein rohrförmiges Stück 4 angeformt ist. Auf das rohrförmige Stück 4 des Hüllrohres la ist ein Kupplungsstück 19 aufschiebbar. Dieses weist in diesem Bereich eine Innenform auf, die der Aussenform des rohrförmigen Stückes 4 des Hüllrohrendes 3 entspricht. Das Kupplungsstück 19 ist an seinem Ende, welches mit dem Hüllrohr la zu verbinden ist, mit einem Flansch 6 ausgerüstet. Dieser Flansch 6 ist gegenüber der Oberfläche des Kupplungsstückes 19 um einen Winkel α geneigt. Zwischen dem Flansch 6 und der ersten Ausbuchtung 2a des Hüllrohres la ist ein Dichtring 7 aus weichelastischem Material eingelegt. Das Kupplungsstück 19 ist so weit auf das Hüllrohrende 3 aufgeschoben, dass der Dichtring 7 zwischen dem Flansch 6 des Anschlussstückes 5 und der ersten Ausbuchtung 2a des Hüllrohres la eingeklemmt ist.

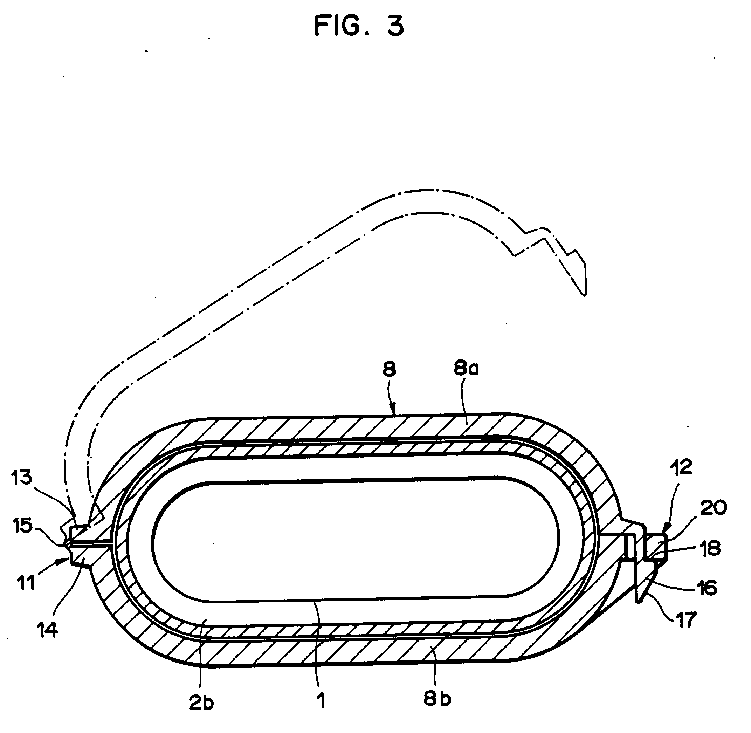

Zum Festhalten des Kupplungsstückes 19 in dieser Position umschliesst eine Muffe 8, die gemäss Fig. 3 aus zwei Halbschalen 8a und 8b besteht, das Hüllrohr la und das Kupplungsstück 19. In die Muffe 8 ist auf der Innenseite eine mittig angeordnete umlaufende trapezförmige Nut 9 eingearbeitet. Diese trapezförmige Nut 9 ist beidseitig von einer Schrägfläche 10a und 10b begrenzt. Im montierten Zustand der Muffe 8 dient die Schrägfläche 10a als Abstützfläche für die Ausbuchtung 2a, während sich auf der Schrägfläche 10b der Flansch 6 des Kupplungsstückes 19 abstützt. Die beiden Schrägflächen 10a und 10b der trapezförmigen Nut 9 weisen einen Neigungswinkel auf, der etwa dem Winkel α des Flansches 6 des Kupplungsstückes 19 bzw. dem Steigungswinkel der Ausbuchtung 2a entspricht.

Beim Anlegen der Muffe 8 um die Verbindungsstelle des Hüllrohres la und des Kupplungsstückes 19 wird durch die Schrägflächen 10a und 10b der trapezförmigen Nut 9 der daran anliegende Flansch 6 des Kupplungsstückes 19 bzw. die Ausbuchtung 2a des Hüllrohres 1 zusätzlich gegeneinandergeschoben, wodurch der Dichtring 7 wegen seines weich elastischen Materials weiter zusammengedrückt wird. Dadurch entsteht eine Verbindung, bei welcher eine absolute Dichtheit gegen Eindringen von Flüssigkeit, insbesondere Zementmilch, gewährleistet ist.

Da das Kupplungsstück an seinen beidseitigen Enden je mit einem Flansch 6 ausgerüstet ist, kann das Hüllrohrende 3 des Hüllrohres 1b genau gleich wie vorgängig beschrieben mit dem anderen Ende des Kupplungsstückes 19 verbunden werden. Dazu werden eine zweite Muffe 8 und ein zweiter Dichtring 7 benötigt. Das Kupplungsstück 19 ist geeignet, um miteinander zu verbindende Hüllrohre an die im Bauwerk geforderte Gesamtlänge anzupassen. Dazu ist vorgesehen, verschieden lange Kupplungsstücke herzustellen, wobei die Differenz vom längsten zum kürzesten Kupplungsstück gleich der Teilung der Ausbuchtungsabstände ist.

Durch diese Anordnung wird eine absolut flüssigkeitsdichte Verbindung von zwei Hüllrohren 1a und 1b erhalten, mit welcher mechanische Beanspruchungen, insbesondere eine Knickbeanspruchung, vom einen Hüllrohr la auf das andere Hüllrohr 1b übergragbar sind. Dies ist insbesondere deshalb der Fall, weil das Kupplungsstück 19 die beiden rohrförmigen Stücke 4 jedes Hüllrohres la und 1b satt umfassen.

Die Muffe 8 ist so gestaltet, dass je der Bereich, der das Hüllrohr 1a, 1b, bzw. das Kupplungsstück 19 umfasst, Innenabmessungen aufweist, die den Aussenabmessungen des jeweils umfassten Hüllrohres la, 1b, bzw. Kupplungsstückes 19 entspricht.

Fig. 2 zeigt eine Ansicht der Verbindungsstelle der Hüllrohre 1a, 1b mit dem Kupplungsstück 19. Von den Muffen 8 sind die Halbschalen 8a sichtbar. Auf der einen Seite sind diese mit einem Gelenk 11 ausgerüstet, über welches die Halbschalen 8a mit den nicht sichtbaren Halbschalen 8b in axialer Richtung gelenkig verbunden sind. Auf der gegenüberliegenden Seite verfügen die Halbschalen 8a über Verbindungsmittel 12, durch welche die Halbschalen 8a mit den Halbschalen 8b verbindbar sind.

Aus Fig. 3, in der ein Schnitt gemäss Linie III-III nach Fig. 1 durch eine der Muffen 8 dargestellt ist, ist der Aufbau der Muffe 8 ersichtlich. Diese besteht aus zwei hälftigen Teilschalen 8a und 8b. Die Teilschalen 8a und 8b sind an der einen Stossstelle durch das Gelenk 11 derart miteinander verbunden, dass sie gegenseitig aufschwenkbar sind. Jede der Halbschalen 8a und 8b ist an der gelenkseitigen Stossstelle mit einem Steg 13 bzw. 14 versehen, die sich praktisch über die gesamte Breite der Muffe erstrecken, wie auch aus Fig. 2 ersichtlich ist und die an der Aussenseite durch eine angeformte Folie 15 miteinander verbunden sind. In Fig. 3 ist eine Lage der aufgeschwenkten Halbschale 8a strichpunktiert dargestellt. An der Stossstelle der beiden Halbschalen 8a und 8b, die der Gelenkseite gegenüberliegt, sind Verbindungsmittel 12 angebracht, welche ein Fixieren der beiden Halbschalen 8a und 8b im montierten Zustand ermöglicht. Das Verbindungsmittel 12 setzt sich aus einem Bügel 20, der an der Halbschale 8b angebracht ist, und einem Haken 16, angeordnet an der Halbschale 8a, zusammen.

Beim Zusammendrücken der beiden Halbschalen 8a und 8b wird der Haken 16 über die abgeschrägte Fläche 17 durch den Bügel 20 elastisch zurückgedrückt und schnappt dann beim Erreichen der Endlage mit seiner Haltefläche 18 klinkenartig in den Bügel 20 ein.

Die Schnittdarstellung gemäss Fig. 3 zeigt, dass die beiden Halbschalen 8a und 8b das entsprechende Hüllrohr 1a, 1b, bzw. dessen Ausbuchtung 2a vollumfänglich umschliessen. Es ist jedem Fachmann sofort klar, dass die erfindungsgemässe Vorrichtung, entsprechend ausgebildet, auch für nicht ovale Hüllrohre verwendet werden kann.

In den vorgängig beschriebenen Anordnungen bestehen die Hüllrohre 1a und 1b aus Kunststoff, in vorteilhafter Weise sind auch das Anschlussstück 1, das Kupplungsstück 19 und die Muffen 8 aus Kunststoff gefertigt.

Im weiteren ist ebenfalls vorgesehen, dem Kupplungsstück 19, wie dies in der Fig. 1 gestrichelt dargestellt ist, einen Injektions-, Entlüftungs- oder Entwässerungsanschluss 21 anzuordnen. Dazu ist es notwendig, dass zwischen den einzelnen, gestrichelt dargestellten Hüllrohrenden 22 ein genügend grosser Abstand ist.

## Patentansprüche

1. Vorrichtung zum Verbinden von zwei Hüllrohren, welche für die Aufnahme von Spannkabeln in Betontragwerken bestimmt und je mit voneinander beabstandeten Ausbuchtungen versehen sind, bestehend aus einer Muffe, die mit je einem Teilbereich einen Bereich der Hüllrohrenden umfasst, und einem Abdichtmittel, gekennzeichnet durch die folgenden Merkmale:
- es ist ein Kupplungsstück (19) vorgesehen, das zum Verbinden der Hüllrohre (1a, 1b), welche stirnseitig im wesentlichen aneinanderstossen, ausgebildet ist und an seinen beiden stirnseitigen Enden je einen Flansch (6) aufweist,
- das Kupplungsstück (19) ist auf das Ende des einen Hüllrohres (la) aufschiebbar, bis der eine Flansch (6) mit seiner ringförmigen Aussenseite an der ersten Ausbuchtung (2a) des einen Hüllrohres (1a) zum Anliegen kommt, das andere Hüllrohr (1b) ist in das Kupplungsstück (19) einschiebbar, bis der andere der Flansche (6) mit seiner ringförmigen Aussenseite an der ersten Ausbuchtung (2a) des anderen Hüllrohres (1b) zum Anliegen kommt,
- es sind zwei Muffen vorgesehen, wobei jede der Muffen (8) aus mindestens zwei miteinander verbindbaren Teilschalen (8a) und (8b) besteht, die auf der Innenseite eine mittig angeordnete, umlaufende trapezförmige Nut (9) aufweisen, deren ringförmige Schrägflächen (10a) und (10b) als Halterung für den Flansch (6) bzw. die Ausbuchtung (2a) des einen Hüllrohres (la) bzw. des anderen Hüllrohres (1b) dienen,
- es sind zwei Abdichtmittel (7) vorhanden, wovon eines zwischen der Ausbuchtung (2a) des Hüllrohres (1a) und dem einen Flansch (6) des Kupplungsstückes (19) und das andere zwischen der Ausbuchtung (2a) des Hüllrohres (1b) und dem anderen Flansch (6) angeordnet ist.

2. Vorrichtung nach Anspruch 1, dadurch gekennzeichnet, dass die Flansche (6) des Kupplungsstückes (19) gegenüber der Oberfläche des Kupplungsstückes (19) um einen Winkel (α) geneigt sind, welcher im wesentlichen dem Winkel der Schrägflächen (10a) und (10b) der umlaufenden trapezförmigen Nut (9) und dem Steigungswinkel der Ausbuchtung (2a) der Hüllrohre (1a, 1b) entspricht.

3. Vorrichtung nach Anspruch 1 oder 2, dadurch gekennzeichnet, dass das Kupplungsstück (19) in seiner Länge so bemessen ist, dass die totale Länge der zu verbindenden Hüllrohre (1a, 1b) an eine geforderte Gesamtlänge anpassbar ist.

4. Vorrichtung nach einem der Ansprüche 1 bis 3, dadurch gekennzeichnet, dass das Abdichtmittel aus einem weichelastischen Dichtring (7) besteht, der je zwischen einer der Ausbuchtungen (2a) der Hüllrohre (1a, 1b) und je einem der Flansche (6) des Kupplungsstückes (19) angeordnet ist.

5. Vorrichtung nach einem der Ansprüche 1 bis 4, dadurch gekennzeichnet, dass die Muffe (8) aus zwei Halbschalen (8a) und (8b) besteht, die an einer gemeinsamen Stossstelle in axialer Richtung durch ein Gelenk (11) miteinander verbunden sind und an der anderen Stossstelle mit Verbindungsmitteln (12) ausgestattet sind.

6. Vorrichtung nach Anspruch 5, dadurch gekennzeichnet, dass die Verbindungsmittel (12) aus einem an der einen Halbschale (8a) befestigten Haken (16) und einem an der anderen Halbschale (8b) befestigten Bügel (20), in welchen der Haken (16) einklinkbar ist, bestehen.

7. Vorrichtung nach einem der Ansprüche 1 bis 6, dadurch gekennzeichnet, dass jeweils die dem mittleren Bereich mit der umlaufenden trapezförmigen Nut (9) angrenzenden Randbereiche der Muffe (8) je den Aussenabmessungen des umfassenden Hüllrohres (1a, 1b) bzw. des Kupplungsstückes (19) entsprechende Innenabmessungen aufweist.

## Claims

1. Device for connecting two sheaths intended for receiving prestressing cables in concrete supporting structures and which are each provided with protrusions spaced at a distance one from the other consisting of a socket, which with one portion in each case encompasses a portion of the sheath ends, and of a sealing means, characterized by the following features:
- a coupling element (19) is provided, which is designed to connect the sheaths (1a, 1b) which abut substantially at their end faces, having a flange (6) at each of its two end faces,
- the coupling element (19) can be pushed onto the end of one sheath (1a) until the circular outside of one flange (6) comes to rest on the first protrusion (2a) of one sheath (1a), and the other sheath (1b) can be inserted into the coupling element (19) until the circular outside of the other flange (6) comes to rest on the first protrusion (2a) of the other sheath (1b),
- two sockets are provided, each of the sockets (8) consisting of at least two connectible portions (8a) and (8b) which have, disposed centrally on the inside, an encircling trapezoidal groove (9) whose ring-shaped sloping surfaces (10a) and (10b) serve to fix the flange (6) or the protrusion (2a) of one (1a) or other (1b) of the sheaths,
two sealing means (7) are provided, of which one is disposed between the protrusion (2a) of the sheath (la) and one of the flanges (6) on the coupling element (19), and the other between the protrusion (2a) of the sheath (1b) and the other flange (6).

2. Device according to claim 1, characterized in that the flanges (6) of the coupling element (19) are inclined in relation to the surface of the coupling element (19) by an angle (α) which corresponds essentially to the angle of the sloping surfaces (10a) and (10b) of the encircling trapezoidal groove (9) and the pitch angle of the protrusion (2a) of the sheaths (1a, 1b).

3. Device according to claim 1 or 2, characterized in that the the coupling element (19) in its length is measured so that total length of sheaths (1a, 1b) to be joined can be adapted to a required total length.

4. Device according to one of the claims 1 to 3, characterized in that the sealing means consists of a flexible sealing ring (7) disposed between each one of the protrusions (2a) of the sheaths (1a, 1b) and each one of the flanges (6) of the coupling element (19).

5. Device according to one of the claims 1 to 4, characterized in that the socket (8) consists of two half portions (8a) and (8b), which are joined together in the axial direction by a hinge (11) at a common connecting point and are fitted at the other connecting point with connecting means (12).

6. Device according to claim 5, characterized in that the connecting means (12) consist of a hook (16) affixed to one of the half portions (8a) and of an arm (20) affixed to the other half portion (8b), into which the hook (16) can latch.

7. Device according to one of the claims 1 to 6, characterized in that the inner dimensions of the edge portions of the socket (8) bordering the central portion with the encircling trapezoidal groove (9) correspond to the outer dimensions in each case of the encompassing sheath (1a, 1b) or respectively of the coupling element (19).

## Revendications

1. Dispositif pour relier deux tubes de gainage destiné à loger des câbles de tension dans l'ossature d'ouvrages en béton et munis chacun de renflements espacés, composé d'un manchon dont chaque extrémité entoure une partie des extrémités des tubes de gainage et de moyens d'étanchéification, caractérisé en ce que:
- une pièce d'accouplement (19) est formée de manière à relier les tubes de gainage (1a, 1b) dont les extrémités sont pratiquement appuyés l'une contre l'autre, les deux extrémités de ladite pièce présentant chacune un collet (6),
la pièce d'accouplement (19) peut être enfilée sur l'extrémité d'un des tubes de gainage (1a), jusqu'à ce qu'un des collets (6) touche avec sa face externe annulaire le premier renflement (2a) d'un tube de gainage (1a), l'autre tube de gainage (1b) pouvant être enfilé dans la pièce d'accouplement (19) jusqu'à ce que l'autre collet (6) touche avec sa face externe annulaire le premier renflement (2a) de l'autre tube de gainage (1b),
- deux manchons sont prévus, chaque manchon (8) étant formé d'au moins deux coques partielles (8a) et (8b) pouvant être fixées entre elles, chaque manchon présentant au milieu de sa face interne une gorge trapézoïdale (9) périphérique dont les surfaces obliques annulaires (10a) et (10b) servent de fixation pour le collet (6), respectivement le renflement (2a) d'un tube de gainage (1a), respectivement de l'autre tube de gainage (1b),
- deux moyens d'étanchéification (7) sont prévus, l'un étant placé entre le renflement (2a) du tube de gainage (la) et le collet (6) de la pièce d'accouplement (19), l'autre entre le renflement (2a) du tube de gainage (1b) et l'autre collet (6).

2. Dispositif selon la revendication 1, caractérisé en ce que le collet (6) de la pièce d'accouplement (19) est incliné par rapport à la surface externe de la pièce d'accouplement (19) d'un angle (α) correspondant sensiblement à l'angle des surfaces obliques (10a) et (10b) de la gorge trapézoïdale périphérique (9) et à l'angle de la pente formée par le renflement (2a) des tubes de gainage (1a, 1b).

3. Dispositif selon la revendication 1 ou 2, caractérisé en ce que la pièce d'accouplement (19) a une longueur déterminée de manière à ce la longueur totale des tubes de gainage (1a, 1b) à relier soit adaptable à une longueur totale nécessaire.

4. Dispositif selon l'une des revendications 1 à 3, caractérisé en ce que les moyens d'étanchéification sont formés d'un joint annulaire élastique mou (7) placé entre chaque renflement (2a) des tubes de gainage (1a, 1b) et chaque collet (6) de la pièce d'accouplement (19).

5. Dispositif selon l'une des revendications 1 à 4, caractérisé en ce que le manchon (8) est formé de deux demi-coques (8a) et (8b) liées entre elles en un premier point de contact en direction axiale par une charnière (11) et munies à l'autre point de contact de moyens de liaison (12).

6. Dispositif selon la revendication 5, caractérisé en ce que les moyens de liaison (12) sont composés d'un crochet (16) fixé à l'une des demi-coques (8a) et d'un arceau (20) fixé à l'autre demi-coque (8b), le crochet (16) pouvant être engagé dans l'arceau (20).

7. Dispositif selon l'une des revendications 1 à 6, caractérisé en ce que les deux extrémités du manchon (8), de chaque côté de la partie centrale avec la gorge trapézoïdale périphérique (9), ont des dimensions internes correspondant aux dimensions externes du tube de gaînage entouré (1a, 1b), respectivement de la pièce d'accouplement (19).
